# EUROPEAN PATENT SPECIFICATION

(11) **EP 1 799 512 B1**
(45) Date of publication and mention of the grant of the patent: **20.08.2008**
(21) Application number: 05787034.7
(22) Date of filing: 21.09.2005
(51) Int. Cl.: B60R 9/06, B60R 9/10

(54) **LOAD CARRIER**
LASTTRÄGER
PORTE-CHARGES

(30) Priority: 21.09.2004 NL 1027082
(43) Date of publication of application: 27.06.2007
(73) Proprietor: Spinder Fietsendragers B.V., 9281 LC Harkema (NL)
(72) Inventor: JORRITSMA, Wibern, NL-8724 LH Heidenskip (NL)
(74) Representative: Klooster, Jan Hanri
(86) International application number: PCT/NL2005/000690
(87) International publication number: WO 2006/033573

(56) References cited:
- EP-A- 1 095 820
- EP-A- 1 293 386
- WO-A-99/54169
- DE-A1- 10 208 163
- FR-A- 2 688 178

## Description

The invention relates to a load carrier, e.g. for a bicycle rack, provided with a coupling device to be releasably coupled upon a vehicle towing hook having a neck portion and ball portion.

Many different load carriers with coupling devices are known for coupling, e.g. a bicycle rack, onto the towing hook of a vehicle. In European patent publication no.

EP 0666197 a load carrier for bicycles is described with a coupling device comprising a sliding element and a screw element. While coupling this load carrier onto the towing hook, first the bicycle carrier is positioned onto the towing hook, and then the sliding element is positioned over the neck of the towing hook. In order to obtain a solid stable connection between the coupling device and the ball subsequently a screw element or bolt must be tightened for obtaining a strong clamping force around the ball. This and other known load carriers have thus the disadvantage that the coupling method of the load carrier onto the towing hook is complicated, difficult and hard, requiring a lot of different handling actions. With these known load carriers usually clamping means must be tightened to obtain a strong, stable and traffic safe connection between the load carrier and the towing hook. During tightening of the screw member the load carrier must be supported by the person performing the coupling operation.

European Patent publication EP 1293 386 A1 discloses a coupling device for coupling a load carrier to a ball and a neck of a towing of a vehicle comprising at least two engaging members coupled to the load carrier and for arranging releasably around the ball when operated by a lever, which lever is formed by the load carrier. This coupling device must be assembled from a high number of parts that cooperate together in a rather complex way.

it is an object of the invention to provide for a coupling device which may be reliably and easily coupled upon the towing hook of a vehicle, without having the need to use additional sliding or tightening means and whereby the coupling operation upon and from is performed by one simple movement of the load carrier. Moreover the coupling device must be easy and cheap produced and must be assembled from a small number of easily produced constructional parts.
This objective is achieved by a coupling device of the load carrier comprising the following constructional parts:
a. a coupling house comprising at least two sided house portions provided with bearing means for receiving the camshaft;
b. a first ball clamping member positioned between the sided house portions of the coupling house and fixedly connected therewith;
c. a camshaft pivotably connected to the sided house portions of the coupling house, and furthermore provided with at least an eccentric shaped piece for tensioning a spring member of a second ball clamping member;
d. a second ball clamping member pivotably arranged onto the camshaft in the coupling house between the sided house portions, said clamping member furthermore being provided with a spring member;
e. a lever fixedly connected to the camshaft for rotating said camshaft around its longitudinal axis;
one and the other in such a way that the coupling house is successively coupled upon the towing hook by a first step lowering the open coupling house from above onto the ball resulting in that the second ball clamping member rotates around the camshaft from a first open position of the coupling device, into a second finally closed end position of said device whereby the first and the second ball clamping member respectively clampingly engage the ball on opposite sides and whereby in a second step by tilting the lever the eccentric shaped piece of the camshaft abuts the spring member so that the second ball clamping member is displaced in the direction of the ball and as a result both ball clamping members exert a high clamping force on opposite sides of the ball of the towing hook.

Alternatively the lever is formed by two lever parts fixedly connected to the carrier, whereby the lever parts on the exterior of both sides of the sided house pieces are each fixedly connected to the outer ends of the camshaft. By using the carrier in this way advantageously a long lever is obtained, so that easily a great momentum of force may be applied to the camshaft in order to clampingly engage the ball of the towing hook with a high clamping force.

Particularly by continued tilting of the lever the coupling device together with the carrier is moved into a third tilting position, whereby the ball clamping members continue to clampingly engage the ball of the towing hook on opposite sides thus enabling to allow the load carrier to assume a temporary downward position, particularly for allowing to open up the backdoor of the vehicle free away from the load carrier, whereafter the coupling device may be moved into its prior position (after closing the back door).

As a result dismounting of the load carrier is not needed, when the backdoor of the vehicle must be opened.

Preferably the spring member is assembled from a number of cup springs. By a combined use of these cup springs and a camshaft a high clamping force may be easily generated upon the ball clamping members.

Particularly the second ball clamping member is essentially of a cylindrical shape and provided with recesses, whereby the recesses for receiving the camshaft are provided, in a cross section, diametrically opposing each other, in the cylinder wall far away at the backside of said member; said recesses being preferably located near the back side of the second ball clamping member; in such a way that in the first open position of the coupling device the second ball clamping member is oriented downward with its front side. These measures allow the coupling device to be always mounted easily, stable and safe upon the towing hook without additional handling; prior to clamping it upon the ball of the towing hook.

Preferably the eccentric shaped piece of the camshaft is provided with a first cam portion having in circumferential direction an increasing radius with respect to the radius of the non-eccentric portion of the camshaft in the event that in the second closed position of the coupling device the clamping force is exerted upon the second ball clamping member and with a transition portion, between the first cam portion and the second portion, provided with a circumferentially constant radius with the purpose to obtain a constant clamping force during the movement of the carrier and the lever connected therewith between the second position into its (temporary) third position. By providing the cam with differently shaped portions the subsequent handling actions or mounting steps, clamping and tilting through, the load carrier are friendly and safe combined for use.

Another embodiment the sided house portions of the coupling house are designed as two principally parallel extending, straight plate portions, with their first ends being fixedly connected to the first ball clamping member and with their opposite ends being interconnected by means of an abutting member which prevents that the second ball clamping member with its front side enters into a full perpendicularly downwardly facing position (in the first open position of the coupling device). In this way it is guaranteed that the coupling device will always assume the correct coupling position so that as a result the user may couple the load carrier easily and reliable upon the towing element without the need of additional handling actions by its user.

Particularly the coupling device is provided with a locking member cooperating with locking means provided on the coupling house by locking the position of the coupling device into its second, closed, position. This measure provides for a very traffic safe coupling while preventing an undesired dismounting e.g. during the driving of the vehicle.

Preferably the locking member consists of a locking strip extending between recesses provided in both lever parts, said recesses being formed in such a way that the locking strip is radially displaceable in the lever parts; the locking means being designed as two parallel, preferably sheet shaped, locking side parts, extending at equidistantly parallel to the side pieces, said side parts being provided with a concave circular shaped backside edge - edge opposite to the ball clamping members - the radius of curvature corresponding to the distance on the lever between the recess and the central axis of the camshaft.

Particularly on their circular back sides the locking side parts are provided with a recess for receiving the locking strip, whereby in a first open position of the coupling device the locking side parts force the locking strip into the utmost position of the recesses against the spring force and whereby in a second (locked) closed position of the coupling device the locking strip is forced by the spring force into recess of the locking side parts. The resulting locking means may be easily and cheap produced and may be assembled from a small number of constructional parts.

In a practical embodiment at least one of the locking side parts is provided with an abutting surface in order to limit the displacement of the lever parts and the carrier connected therewith into a third position of the coupling device, by abutting the locking strip to support onto the abutting surface. These measures allow the tilting mechanisms to be easily and reliably combined with the locking mechanisms.

In a preferred embodiment the locking side parts are releasably connected with the side pieces by means of a first opening to guide the camshaft so that as a result the locking side parts are rotatable with respect to the side pieces and to a second adjustable connection with the side pieces, in such a way that the locking side parts may assume different tilted positions with respect to the side pieces, thus enabling adjustment of the position of the load carrier in a plane comprising a horizontal line perpendicular to the wheel axis of the car and a perpendicular vertical line, in the second closed (locked) position of the coupling device. The load carrier becomes now easily adjustable with respect to deviations in the orientation of the towing hook.

Preferably the second adjustable connection between the side pieces and the locking side parts consists of a bolt and nut connection arranged in the openings provided in the pieces and the parts.

The invention is further explained by means of the drawing in which:
Fig. 1 shows an overall perspective view of the load carrier according to the invention;
Fig. 2 shows a perspective view of the central support frame with coupling device;
Fig. 3 is an enlarged perspective view of the coupling device according to the invention prior to its mounting upon a towing hook;
Fig. 4. is an enlarged perspective view of the coupling device according to the invention after its mounting upon the towing hook;
Fig. 5A is an enlarged side view of the coupling house;
Fig. 5B is an enlarged perspective top view of the coupling house;
Fig. 5C is an enlarged perspective top view of the coupling house;
Fig. 6A is top view of the coupling device according to the invention before its mounting upon a towing hook;
Fig. 6B is cross sectional view A-A of the coupling device of Fig. 6A;
Fig. 7 is an exploded enlarged perspective view of the parts of the coupling device;
Fig. 8 is an enlarged perspective side view of a lockable and adjustable embodiment of the coupling device;
Fig. 9A is an enlarged perspective side view of the camshaft;
Fig. 9B is an enlarged cross sectional view of the camshaft of Fig. 9B;
Fig. 10 is an enlarged cross sectional view A-A of the coupling device of Fig. 6A in its locked position;
Fig. 11A is a top view of the coupling device in its tilting down third position and
Fig. 11B is a cross sectional view A-A of the coupling device of Fig. 11A.

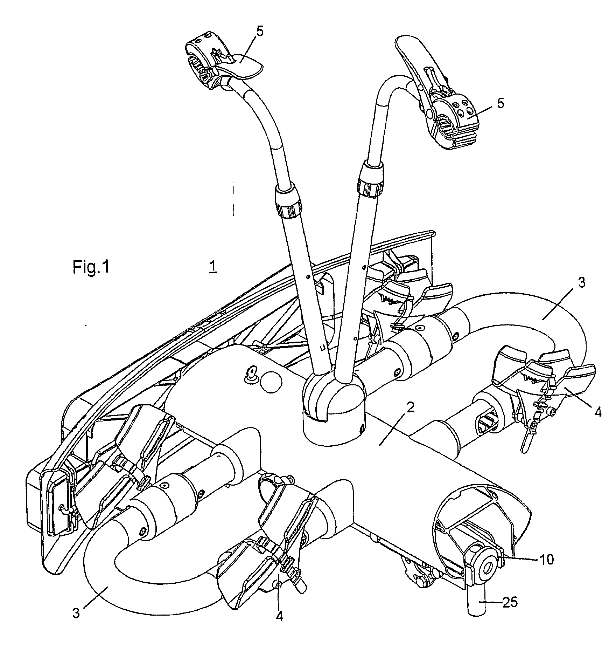

In the drawing Fig.1 shows an overall view of the load carrier according to the invention. In this embodiment the load carrier consists of a bicycle carrier 1 provided with a central supporting frame 2, supporting tubes 3, load holders like bicycle wheel holders 4, load clamps like bicycle frame clamps 5 and a coupling device 10 for coupling of the load carrier upon a towing hook.

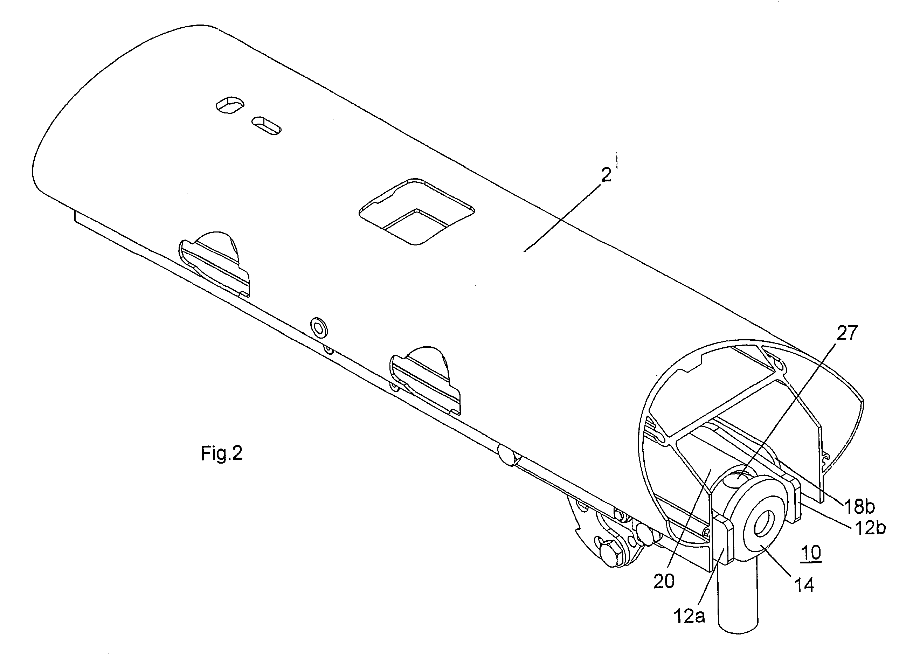

In Fig.2 is shown in detail in top view supporting frame 2 with coupling device 10 in its closed position. A part of the top side of the ball 27 of the towing hook is just visible between the first ball clamp member 14 and the second ball clamp member 20. In the embodiment of Fig.2 the central supporting frame 2 is fixedly attached to the lever parts 18a (not visible), 18b so that by tilting the load carrier 1 and the central supporting frame 2 in upward and downward direction the lever 18 is tilting simultaneous. In this embodiment the whole carrier advantageously is used as a lever. If desired the central supporting frame may alternatively also be mounted to sided house portions 12a, 12b, so that by means of a separate lever the clamping force may be applied to the ball clamp members.

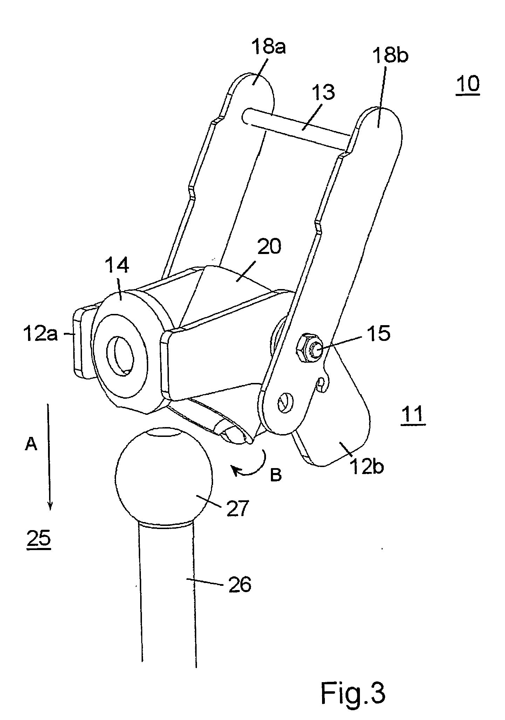

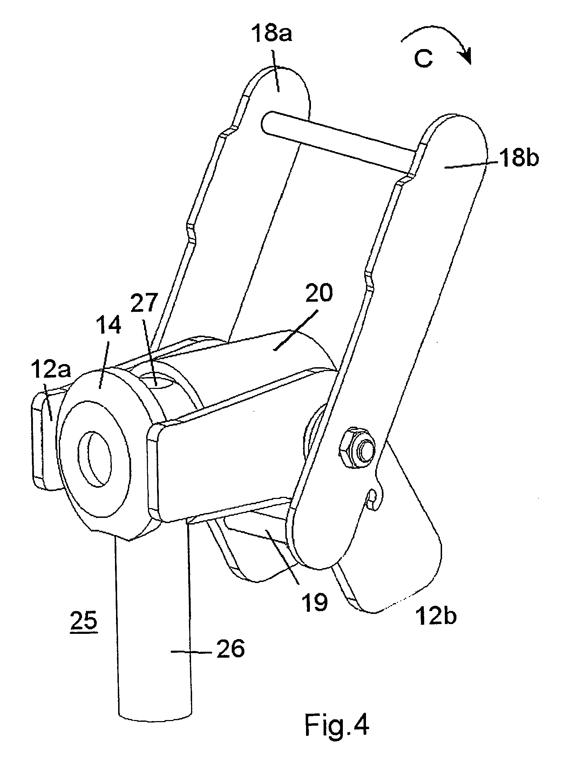

In Fig.3 is perspectively shown in detail coupling device 10 of the load carrier comprising a coupling house 11. The coupling house 11 comprises in this embodiment two identical sided house portions 12a, 12b, equidistantly interconnected by means of first ball clamping member 14 and a supporting element 19 (see Fig.4). In this embodiment a lever is formed as two lever parts 18a en 18b which are fixedly connected by means of transverse connection element 13. The second ball clamp member 20 is pivotably arranged onto the camshaft 15 in the coupling house between both sided house portions 12a, 12b.

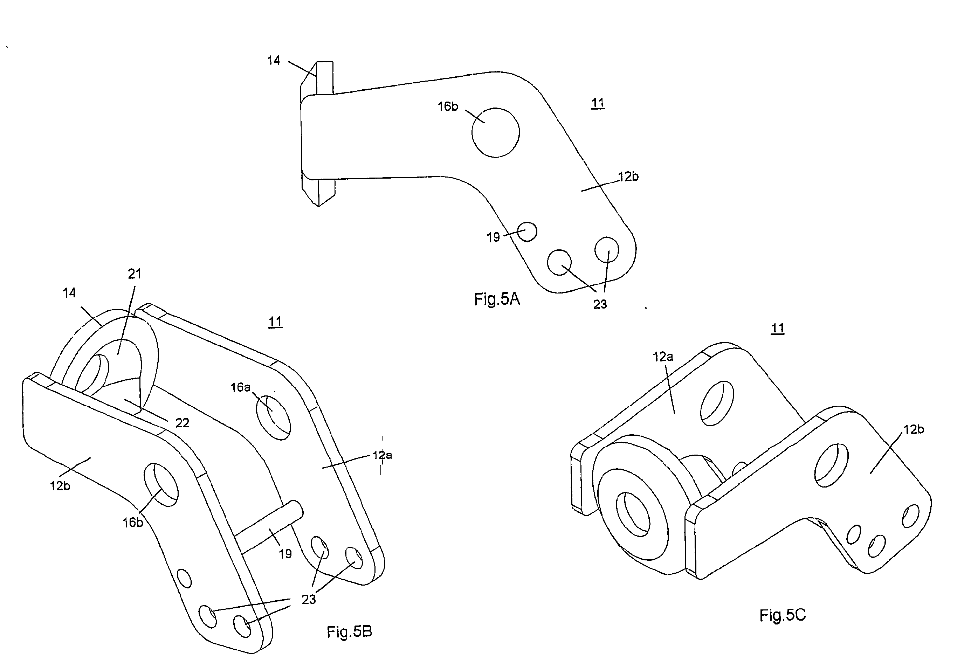

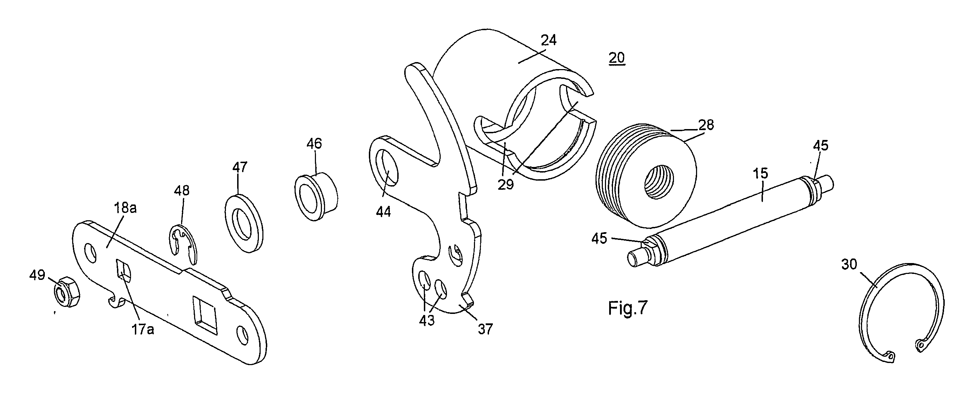

The camshaft 15 is rotably mounted with bearing means between the sided house portions 12a, 12b by pivotably mounting of the extreme ends of the second ball clamping member 20 by exteriorly extending both extreme ends of the camshaft 15 into the circular openings 16a, 16b or bearing means (see Fig.5) provided in the sided house portions 12a, 12b. The ball clamping member 20 is fixedly connected with a lever; in this embodiment by means of non-circular circumferential portions 45 provided on the extreme ends of the camshaft, which portions fit into the corresponding non-circular openings 17a, 17b (see Fig. 7) provided in the lever parts 18a, 18b. As a result by tilting the lever 18 the camshaft 15 will rotate over its longitudinal axis in the coupling house 11 and also with the second coupling member 20.

Fig.5A,B,C show the coupling house more detailed.

In Fig.5A is shown in a side view the coupling house 11 with sided house portion 12b and the opening 16b provided therein for transfer of camshaft 15. Furthermore is shown first ball clamping member 14 fixedly connected, e.g. by welding, between sided house portions 12a, 12b. A second connection between the sided house portions is formed by supporting element 19 that connects the outer ends of the sided house portions, opposite to the first ball clamping member, at the location of the angled short, straight portion. This has the advantage, as will be shown further, that said supporting element may also function as an abutting member for the second ball clamping member 20.

In Fig.5B en 5C the coupling house 11 is perspectively shown. In Fig. 5B the ball-shaped surface 21 is shown for receiving the ball 27 of the towing hook 25. Further is shown cylindrical surface 22 for receiving the neck portion 26 of the towing hook. Later on it will be explained how the shown adjustment openings 23 enable adjustment of the tilting position of the load carrier.

In Fig.7 is shown in more detail second coupling member 20 with cylindrical spring bush holder 24, cup springs 31 and locking ring 30. In operation the cup springs are contained in the spring bush holder by means of camshaft 15, mounted into the oblong recesses 29 diametrically provided opposite each other in the wall of the spring bush holder 24. In order to prevent axial displacement of the camshaft 15 and of the lever parts 18a,b connected therewith, the camshaft may be provided on its outer ends with a ring 47 and a locking ring 48 between the locking side parts 37 and the lever 18a (see Fig.7) In order to improve rotation of the camshaft it may be provided on its outer ends, circumferential on its outside, with a bearing bush 46. Preferably the bearing socket extends through opening 44 from locking side part 37 till recess 29 of the spring bush holder 24.

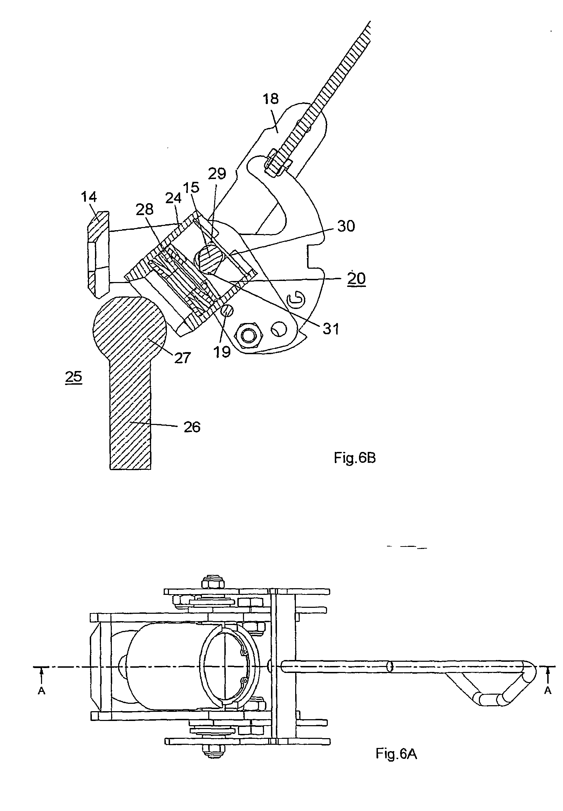

In Fig.6A,B is shown in cross sectional and top view the assembled state of the different parts of the second ball clamping member 20 when in operation. In Fig.6B the coupling device 10 is shown before coupling it to the towing hook 25. Cup springs 28 are mounted on the front or ball side spring bush holder 24. Behind the cup springs 28 the camshaft 15 is mounted into recesses 29 in the spring bush holder 24. While recesses 29 are open on the back side of the spring bush holder 24 the locking ring 30 will prevent dismounting of the second ball clamping member 20 from the camshaft 15. In an alternative embodiment the recesses 29 may be shaped as closed openings so that the camshaft 15 must be guided through the openings. This embodiment has the advantage that the second ball clamping member 20 may be mounted easily upon the camshaft 15 and also be removed or dismounted by means of locking ring 30.

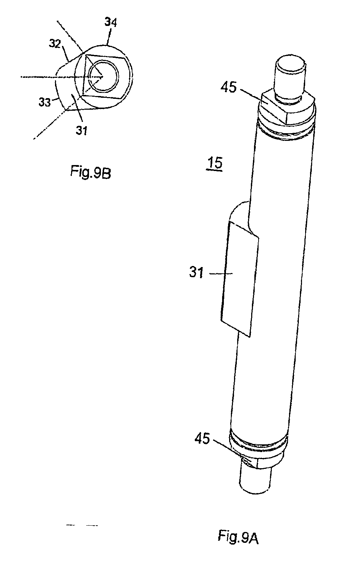

In Fig.9A,B the camshaft 15 is shown in more detail with cam 31 provided upon the camshaft 15. In this embodiment the cam 31 is shaped as a radial bulge on a part of the circumference of the axis, but differently shaped eccentric projecting parts may also be provided. It is essential that the camshaft is provided with a circumferential portion 34 having a small radius and with a circumferential portion 32 having in a circumferential direction an increasing radius, so that by rotating the camshaft 15 around its longitudinal axis the cam portion 32 with the increasing radius abuts and connects with the spring member, in this example a set of cup springs is provided, in order to displace the second ball clamping member 20 in the direction of the ball 27 and as a result exerting a great clamping force on the ball. Fig.9B shows the different portions of the camshaft indicated by dotted lines. Preferably the recesses 29 (see Fig.7) are having an oblong shape, so that the second ball clamping member 20 may be moved between the ball 27 and the camshaft 15.
By means of the figures it will now be explained how the coupling device must be positioned for coupling it upon the towing hook.

In Fig.3 the coupling device is shown in a first open position just above the towing hook 25. In order to enclose quickly and easily the first and second ball clamping member 14, 20 on opposite sides of the ball 27 and the neck 26, the second ball clamping member 20 with it front side - the side adjacent to the ball - must be oriented downward. In this way sufficient space is provided to receive the ball between the sided house portions 12a,12b of the coupling house and moreover the ball will be able to rotate the second ball clamping member 20 upward. Fig.3 shows that when the coupling device 10 is displaced downwardly in the direction of the arrow A over the ball 27 of the towing hook 25, the second ball clamping member 20 will rotate in the direction of arrow B around camshaft 15.

Fig.4 shows the second final position of the coupling device, whereby the coupling device 10 is loosely, non-clampingly, supported upon ball 27 of the towing hook 25. The coupling device 10 and the possibly mounted carrier will not dismount from the towing hook 25 because the second ball clamping member 20 is not allowed to rotate further because the backside of the second ball clamping member 20 is supported upon the neck 26 of the towing hook. In a second step the coupling device 10 will engage the ball and will exert a high clamping force on opposite sides of the ball by rotating the lever 18 downward and the camshaft 15 connected therewith in the direction of arrow C so that camshaft 15 abuts and subsequently compresses the set of cup springs.

Fig.6B shows in a cross-sectional view second ball clamping member 20 supported by its locking ring 30 upon camshaft 15, prior to coupling with the towing hook. Furthermore it is shown that the cam 31 of the camshaft 15 is oriented downward, as a result of the lever 18, connected to the camshaft, being in an upward, non-horizontal, position. The cam 31 is not engaging or abutting the cup springs 28 so that as a result the second ball clamping member 20 will easily rotate upward. The second ball clamping member 20 will always take a downward oriented position, as a result of the backward position of the rotation axis 15. In order to prevent the second ball clamping member from taking a full perpendicular downward position, with its front side facing downwardly so that as a result rotation into a horizontal position is not possible by means of the ball, an abutting member or supporting element 19 is provided between both sided house portions 12a, 12b. The abutting member supports the bottom side of the spring bush holder 24 and will guarantee an optimal position of the second ball clamping member for easy engagement of the ball 27.

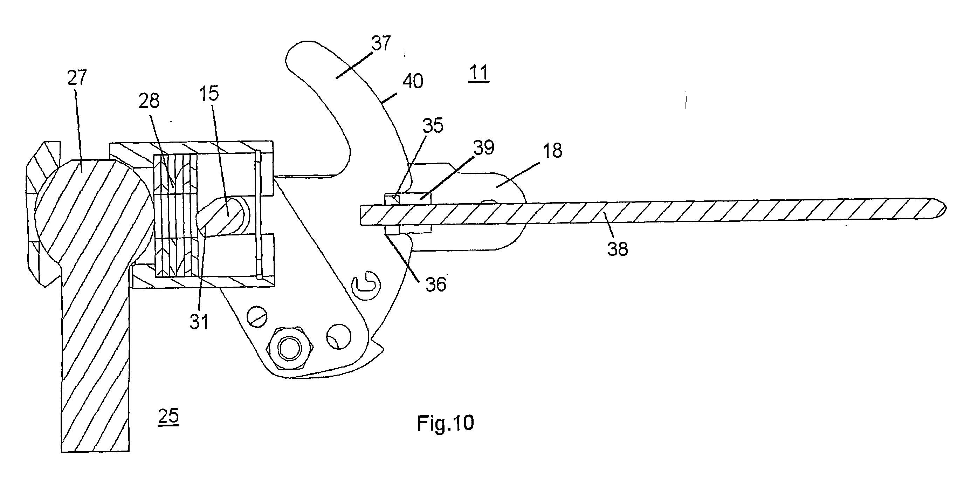

Fig.10 shows in a cross section the second end position of the coupling device with a lever 18, tilted in a horizontal position, and the engagement or connection of the cam 31 with the cup springs 28. Both ball clamping members 14, 20 are now exerting a great clamping force upon the ball 27 of the towing hook 25 so that as a result the load carrier will not move or tilt on the ball during driving of the vehicle.

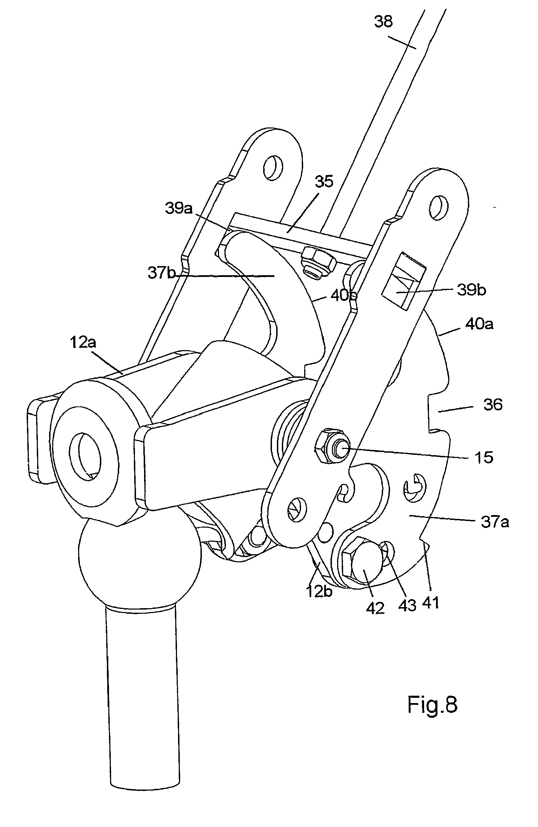

Fig.8 shows the adjustable and lockable embodiment of the coupling device 11. The coupling device is locked in its closed position by means of a locking member cooperating with the locking means. In this embodiment the locking member is a locking strip 35, that extends between recesses 39a,b provided in the lever parts 18a,b, whereby the strip snaps into the locking recess 36 provided in the locking side parts 37a,b to lock the coupling device. The locking side parts 37a,b both are fixedly connected to the sided house portions 12a, and are both provided with a concave circular shaped backside edge 40a,b - edge opposite to the ball clamping members - the radius of curvature of the edges corresponding to the distance on the lever 18 between the recess 39 and the central axis of the camshaft 15. Locking pin 38 is connected to the locking strip 35 by means of a spring element (not shown) and forced or biased in the direction of the second ball clamping member 20. In Fig.8 the first open position of the coupling device 11 is shown whereby the circular outer ends 40a,b retain the locking strip 35 in its backward position in the recesses 39a,b provided in the lever parts 18a,b.
When the coupling device 11 in its second position is moved and clamped upon the ball by means of tilting the lever 18 downward into a horizontal position, the locking strip 35 is forced or snapped into recesses 36a,b provided in the locking side parts 37a,b, by the spring force exerted by the spring element upon the locking pin 38 (see Fig.10). For releasing or unlocking the coupling device 11, the locking pin 38 and the locking strip 36 connected therewith must be displaced from the locking recesses 36 opposing the spring force, thus again enabling tilting of the coupling house 11 e.g. for dismounting of the coupling device and the load carrier.

Fig.10 shows in cross section the locked position of the coupling device 11, whereby locking strip 35 is forced into recess 36 by means of the spring force exerted upon locking pin 38, so that tilting of the lever 18 is made impossible.

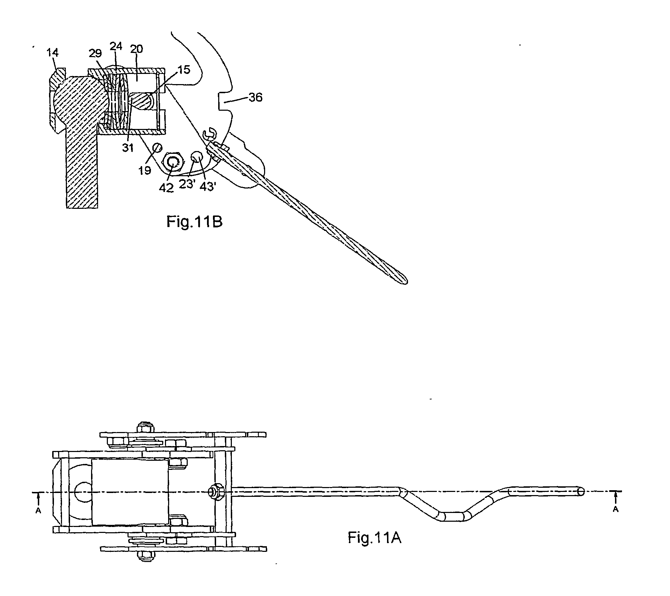

Fig.11A,B shows a third tilted through end position of the coupling device 11 of the load carrier. In this position the load carrier is temporarily tilted downward while the coupling device remains clampingly engaging the ball 27 of the towing hook. This position is advantageously because it so allows to open up the backdoor of a vehicle for free movement away from the load carrier. It is therefore not necessary to remove or dismount the load carrier from the towing hook, to open the backdoor. For tilting the load carrier temporarily downward an abutting surface 41 is provided upon locking side part 37 (see Fig.8). In order to enable further tilting of the load carrier downward from the second position of Fig.10 into the third position of Fig.11 the coupling device 11 must first be unlocked by removing locking pin 38 and locking strip 35 from locking recess 36. Subsequently the lever 18 and the load carrier connected therewith may be tilted further downward until the locking strip 35 engages the supporting surface 41.

Fig.8 also shows an adjustment device to adjust the load carrier for deviation of the orientation of the towing hook. When the towing hook of the vehicle is out of its perpendicular position correction is possible by means of the shown adjustable connection. In this embodiment the adjustable connection consists of a bolt and nut connection 42. By moving the connection 42 to the adjacent adjustment openings 23, 43 in the locking side part 37 en sided house portion 12 the entire load carrier will be oriented according to a small upward angle with respect to a horizontal plane. Preferably the locking side parts 37, as shown in Fig.7, are provided with an axis opening 44 and adjustment openings 43. The locking side parts 37 may now be tilted downward or upward with respect to axis opening 44 when connection 42 is released.

Fig.11B clearly shows that by moving connection 42 to adjustment openings 23' en 43' the locking recess 36 will be tilted upward over a small angle, so that as a result in the locked (second) position of the coupling device and therefore also of the load carrier connected therewith it will obtain a small upward angle with respect to the horizontal plane. Advantage of this construction is that the clamping parts of coupling device do not have to be provided with adjustment means.

It will be appreciated by those skilled in the art that various modifications and changes may be made without departing from the scope of the invention.
For instance the camshaft may be connected by means of a bearing design to the sided house portions and e.g. the lever may be connected to another part of the camshaft e.g. a part which is located inside the coupling house. Also the second ball clamping member may be mounted in the coupling house by using another well known construction like e.g. a bearing construction.
Such modifications and changes are intended to fall within the scope of the invention, as defined by the appended claims.

## Claims

1. Load carrier, e.g. for a bicycle rack, provided with a coupling device (10) to be releasably coupled upon a vehicle towing hook (25) having a neck portion (26) and ball portion (27), which coupling device comprises the following constructional parts:
a. a coupling house (11) comprising at least two sided house portions (12a, 12b) provided with bearing means (16a, 16b) for receiving a camshaft (15);
b. a first ball clamping member (14) positioned between the sided house portions (12a, 12b) of the coupling house (11) and fixedly connected therewith;
c. the camshaft (15) pivotably connected to the sided house portions (12a, 12b) of the coupling house (11), and furthermore provided with at least an eccentric shaped piece (31) for tensioning a spring member (28) of a second ball clamping member (20);
d. the second ball clamping member (20), pivotably arranged onto the camshaft (15) in the coupling house (11) between the sided house portions (12a, 12b), said clamping member (20) furthermore being provided with a spring member (28);
e. a lever (18) fixedly connected to the camshaft (15) for rotating said camshaft around its longitudinal axis;
one and the other in such a way that the coupling house (11) is successively coupled upon the towing hook (25) by a first step lowering the open coupling house (11) from above onto the ball (27) resulting in that the second ball clamping member (20) rotates around the camshaft (15) from a first open position of the coupling device, into a second finally closed end position of said device whereby the first and the second ball clamping member (14, 20) respectively clampingly engage the ball (27) on opposite sides and whereby in a second step by tilting the lever (18) the eccentric shaped piece (31) of the camshaft (15) abuts the spring member (28) so that the second ball clamping member (20) is displaced in the direction of the ball (27) and as a result both ball clamping members (14, 20) exert a high clamping force on opposite sides of the ball (27) of the towing hook(25).

2. Load carrier according to claim 1, **characterized in that,** the lever (18) is formed by two lever parts (18a, 18b) fixedly connected to the carrier, whereby the lever parts on the exterior of both sides of the sided house pieces (12a, 12b) are each fixedly connected to the outer ends of the camshaft (15).

3. Load carrier according to anyone of the preceding claims, **characterized in that,** by continued tilting of the lever (18) the coupling device (10) together with the carrier is moved into a third tilting position, whereby the ball clamping members (14, 20) continue to clampingly engage the ball (27) of the towing hook (25) on opposite sides thus enabling to allow the load carrier to assume a temporary downward position, particularly for allowing to open up the backdoor of the vehicle free away from the load carrier, whereafter the coupling device (10) may be moved into its prior position e.g. after closing the back door.

4. Load carrier according to anyone of the preceding claims, **characterized in that**, the spring member is assembled from a number of cup springs (28).

5. Load carrier according to claim 4, **characterized in that,** the second ball clamping member (20) is essentially of a cylindrical shape and provided with recesses (29), whereby the recesses (29) for receiving the camshaft (15) are provided, in a cross section, diametrically opposing each other, in the cylinder wall (24) far away at the backside of said member (20); said recesses (29) being preferably located near the back side of the second ball clamping member (20); in such a way that in the first open position of the coupling device (10) the second ball clamping member (20) is oriented downward with its front side.

6. Load carrier according to claim 5, **characterized in that,** the eccentric shaped piece (31) of the camshaft (15) is provided with a first cam portion (32) having in circumferential direction an increasing radius with respect to the radius of the non-eccentric portion (34) of the camshaft (15) in the event that in the second closed position of the coupling device (10) the clamping force is exerted upon the second ball clamping member (20) and with a transition portion (33), between the first cam portion (32) and the second portion, provided with a circumferentially constant radius with the purpose to obtain a constant clamping force during the movement of the carrier and the lever (18) connected therewith between the second position into its (temporary) third position.

7. Load carrier according to anyone of the preceding claims, **characterized in that,** the sided house portions (12a,12b) of the coupling house (11) are designed as two principally parallel extending, straight plate portions (12a, 12b), with their first ends being fixedly connected to the first ball clamping member (14) and with their opposite ends being interconnected by means of an abutting member (19) which prevents that the second ball clamping member (20) with its front side enters into a full perpendicularly downwardly facing position. (in the first open position of the coupling device (10))

8. Load carrier according to anyone of the preceding claims, **characterized in that**, the coupling device (10) is provided with a locking member (35, 38) cooperating with locking means (36, 37, 40) provided on the coupling house (11) by locking the position of the coupling device (10) into its second, closed, position.

9. Load carrier according to claim 8, **characterized in that,** the locking member consists of a locking strip (35) extending between recesses (39a, 39b) provided in both lever parts (18a, 18b), said recesses being formed in such a way that the locking strip (35) is radially displaceable in the lever parts (18a, 18b); the locking means being designed as two parallel, preferably sheet shaped, locking side parts (37a, 37b), extending equidistantly parallel to the side pieces (12a, 12b), said side parts being provided with a concave circular shaped backside edge - edge opposite to the ball clamping members (14, 20) - the radius of curvature corresponding to the distance on the lever between the recess (39) and the central axis of the camshaft (15).

10. Load carrier according to claim 9, **characterized in that,** on their circular back sides (40) the locking side parts (37a, 37b) are provided with a recess (36) for receiving the locking strip (35), whereby in a first open position of the coupling device (10) the locking side parts (37) force the locking strip (35) into the utmost position of the recesses (39) against the spring force and whereby in a second (locked) closed position of the coupling device (10) the locking strip (35) is forced by the spring force into recess (36) of the locking side parts (37).

11. Load carrier according to claim 10, **characterized in that,** at least one of the locking side parts (37) is provided with an abutting surface (41) in order to limit the displacement of the lever parts (18) and the carrier connected therewith into a third position of the coupling device (10), by abutting the locking strip (35) to support onto the abutting surface (41).

12. Load carrier according to claim 9, **characterized in that,** the locking side parts (37) are releasably connected with the side pieces (12) by means of a first opening (44) to guide the camshaft (15) so that as a result the locking side parts (37) are rotatable with respect to the side pieces (12) and to a second adjustable connection (42) with the side pieces (12), in such a way that the locking side parts (37) may assume different tilted positions with respect to the side pieces (12), thus enabling adjustment of the position of the load carrier in a plane comprising a horizontal line perpendicular to the wheel axis of the car and a perpendicular vertical line, in the second closed (locked) position of the coupling device (10).

13. Load carrier according to claim 12, **characterized in that,** the second adjustable connection between the side pieces (12a,12b) and the locking side parts (37) consists of a bolt and nut connection (42) arranged in the openings (23, 43) provided in the pieces (12) and the parts (37).

## Patentansprüche

1. Lastträger, z. B. für einen Fahrradträger, der mit einer Kupplungsvorrichtung (10) ausgestattet ist, die lösbar an eine Anhängerkupplung (25) mit einem Halsabschnitt (26) und einem Kugelabschnitt (27) gekoppelt werden soll, wobei die Kupplungsvorrichtung die folgenden Bauteile umfasst;
a. ein Kupplungsgehäuse (11), das mindestens zwei seitliche Gehäuseabschnitte (12a, 12b) umfasst, die mit Lagermitteln (16a, 16b) zum Aufnehmen einer Nockenwelle (15) ausgestattet sind.
b. ein erstes Kugelbefestigungselement (14), das zwischen den seitlichen Gehäuseabschnitten (12a, 12b) des Kupplungsgehäuses (11) angeordnet und ortsfest mit diesen verbunden ist,
c. die Nockenwelle (15), die drehbar mit den seitlichen Gehäuseabschnitten (12a, 12b) des Kupplungsgehäuses (11) verbunden ist und des Weiteren mit mindestens einem exzentrisch geformten Stück (31) ausgestattet ist, um ein Federelement (28) eines zweiten Kugelbefestigungselements (20) zu spannen.
d. das zweite Kugelbefestigungselement (20), das drehbar an der Nockenwelle (15) im Kupplungsgehäuse (11) zwischen den seitlichen Gehäuseabschnitten (12a, 12b) angeordnet ist, wobei das Befestigungselement (20) des Weiteren mit einem Federelement (28) ausgestattet ist,
e. einen Hebel (18), der ortsfest an der Nockenwelle (15) befestigt ist, um die Nockenwelle um ihre Längsachse zu drehen,
und zwar derart, dass das Kupplungsgehäuse (11) nacheinander an die Anhängerkupplung (25) gekoppelt wird durch einen ersten Schritt des Absenkens des offenen Kupplungsgehäuses (11) von oben auf die Kugel (27), was dazu führt, dass sich das zweite Kugelbefestigungselement (20) um die Nockenwelle (15) von einer ersten offenen Position der Kupplungsvorrichtung in eine zweite schließlich geschlossene Endposition der Vorrichtung dreht, wobei das erste und das zweite Kugelbefestigungselement (14, 20) die Kugel (27) jeweils an gegenüber liegenden Seiten klemmend erfassen und wobei in einem zweiten Schritt durch Neigen des Hebels (18) das exzentrisch geformte Stück (31) der Nockenwelle (15) an das Federelement (28) stößt, so dass das zweite Kugelbefestigungselement (20) in Richtung der Kugel (27) verschoben wird und im Ergebnis beide Kugelbefestigungselemente (14, 20) an gegenüber liegenden Seiten der Kugel (27) der Anhängerkupplung (25) eine starke Klemmkraft ausüben.

2. Lastträger nach Anspruch 1, **dadurch gekennzeichnet, dass** der Hebel (18) von zwei Hebelteilen (18a, 18b) gebildet ist, die ortsfest mit dem Träger verbunden sind, wobei die Hebelteile jeweils an den beiden Außenseiten der seitlichen Gehäusestücke (12a, 12b) ortsfest mit den äußeren Enden der Nockenwelle (15) verbunden sind.

3. Lastträger nach einem der vorhergehenden Ansprüche, **dadurch gekennzeichnet, dass** durch weiteres Neigen des Hebels (18) die Kupplungsvorrichtung (10) zusammen mit dem Träger in eine dritte Neigungsposition bewegt wird, wobei die Kugelbefestigungselemente (14, 20) weiterhin die Kugel (27) der Anhängerkupplung (25) an gegenüber liegenden Seiten klemmend erfassen, was es dem Lastträger ermöglicht, eine zeitweilige abwärts gerichtete Position einzunehmen, insbesondere um das Öffnen der Heckklappe des Fahrzeugs ungehindert durch den Lastträger zu ermöglichen, wonach die Kupplungsvorrichtung (10) in ihre vorherige Position zurückgebracht werden kann, z. B. nach dem Schließen der Heckklappe.

4. Lastträger nach einem der vorhergehenden Ansprüche, **dadurch gekennzeichnet, dass** das Federelement aus einer Anzahl von Tellerfedern (28) montiert ist.

5. Lastträger nach Anspruch 4, **dadurch gekennzeichnet, dass** das zweite Kugelbefestigungselement (20) im Wesentlichen von zylindrischer Form und mit Vertiefungen (29) ausgestattet ist, wobei die Vertiefungen (29) zum Aufnehmen der Nockenwelle (15) im Querschnitt einander diametral gegenüber liegend in der Zylinderwand (24) weit entfernt an der Rückseite des Elements (20) bereitgestellt sind, wobei die Vertiefungen (29) vorzugsweise nahe der Rückseite des zweiten Kugelbefestigungselements (20) derart bereitgestellt sind, dass in der ersten offenen Position der Kupplungsvorrichtung (10) das zweite Kugelbefestigungselement (20) mit seiner Vorderseite abwärts gerichtet ist.

6. Lastträger nach Anspruch 5, **dadurch gekennzeichnet, dass** das exzentrisch geformte Stück (31) der Nockenwelle (15) mit einem ersten Nockenabschnitt (32) ausgestattet ist, der in umlaufender Richtung einen in Bezug auf den Radius des nicht exzentrischen Abschnitts (34) der Nockenwelle (15) zunehmenden Radius aufweist, damit in der zweiten geschlossen Position der Kupplungsvorrichtung (10) die Klemmkraft auf das zweite Kugelbefestigungselement (20) ausgeübt wird, und mit einem Übergangsabschnitt (33) zwischen dem ersten Nockenabschnitt (32) und dem zweiten Abschnitt, der mit einem umlaufend konstanten Radius ausgestattet ist, damit während der Bewegung des Trägers und des damit verbundenen Hebels (18) von der zweiten Position in seine (zeitweilige) dritte Position eine konstante Klemmkraft erzielt wird.

7. Lastträger nach einem der vorhergehenden Ansprüche, **dadurch gekennzeichnet, dass** die seitlichen Gehäuseabschnitte (12a, 12b) des Kupplungsgehäuses (11) als zwei prinzipiell parallel verlaufende gerade Plattenabschnitte (12a, 12b) gestaltet sind, deren erste Enden ortsfest mit dem ersten Kugelbefestigungselement (14) verbunden sind und deren gegenüber liegende Enden durch ein Anschlagelement (19) miteinander verbunden sind, das verhindert, dass das zweite Kugelbefestigungselement (20) mit seiner Vorderseite (in der ersten offenen Position der Kupplungsvorrichtung (10)) eine vollständig senkrecht nach unten gerichtete Position einnimmt.

8. Lastträger nach einem der vorhergehenden Ansprüche, **dadurch gekennzeichnet, dass** die Kupplungsvorrichtung (10) mit einem Feststellelement (35, 38) ausgestattet ist, das mit den am Kupplungsgehäuse (11) bereitgestellten Feststellmitteln (36, 37, 40) zusammenwirkt, indem die Position der Kupplungsvorrichtung (10) in ihrer zweiten, geschlossenen Position festgestellt wird.

9. Lastträger nach Anspruch 8, **dadurch gekennzeichnet, dass** das Feststellelement aus einer Feststellleiste (35) besteht, die zwischen den Vertiefungen (39a, 39b) verläuft, welche in beiden Hebelteilen (18a, 18b) bereitgestellt sind, wobei die Vertiefungen derart geformt sind, dass die Feststellleiste (35) in den Hebelteilen (18a, 18b) radial verschiebbar ist, wobei die Feststellmittel als zwei parallele, vorzugsweise plattenförmige Feststellseitenteile (37a, 37b) gestaltet sind, die abstandsgetreu parallel zu den Seitenstücken (12a, 12b) verlaufen, wobei die Seitenteile (37a, 37b) mit einer konkaven gerundeten Rückseitenkante ausgestattet sind - die zu den Kugelbefestigungselementen (14, 20) entgegengesetzte Kante -, wobei der Radius der Krümmung dem Abstand auf dem Hebel zwischen der Vertiefung (39) und der Mittelachse der Nockenwelle (15) entspricht.

10. Lastträger nach Anspruch 9, **dadurch gekennzeichnet, dass** die Feststellseitenteile (37a, 37b) an ihren gerundeten Rückseiten (40) mit einer Vertiefung (36) zum Aufnehmen der Feststellleiste (35) ausgestattet sind, wobei in einer ersten offenen Position der Kupplungsvorrichtung (10) die Feststellseitenteile (37) die Feststellleiste (35) gegen die Federkraft in die äußerste Position der Vertiefungen (39) drücken und wobei in einer zweiten (festgestellten) geschlossenen Position der Kupplungsvorrichtung (10) die Feststellleiste (35) durch die Federkraft in die Vertiefung (36) der Feststellseitenteile (37) gedrückt wird.

11. Lastträger nach Anspruch 10, **dadurch gekennzeichnet, dass** mindestens eines der Feststellseitenteile (37) mit einer Anschlagfläche (41) ausgestattet ist, um die Verschiebung der Hebelteile (18) und des damit verbundenen Trägers in eine dritte Position der Kupplungsvorrichtung (10) zu beschränken, indem die Feststellleiste (35) zum Anliegen an der Anschlagfläche (41) gebracht wird.

12. Lastträger nach Anspruch 9, **dadurch gekennzeichnet, dass** die Feststellseitenteile (37) mittels einer ersten Öffnung (44) lösbar mit den Seitenstücken (12) verbunden sind, um die Nockenwelle (15) zu führen, so dass im Ergebnis die Feststellseitenteile (37) in Bezug auf die Seitenstücke (12) und auf eine zweite justierbare Verbindung (42) mit den Seitenstücken (12) derart drehbar sind, dass die Feststellseitenteile (37) in Bezug auf die Seitenstücke (12) unterschiedlich geneigte Positionen einnehmen können, wodurch die Justierung der Position des Lastträgers in einer Ebene ermöglicht wird, die eine horizontale, zur Radachse des Pkw rechtwinklige Linie und in der zweiten geschlossenen (festgestellten) Position der Kupplungsvorrichtung (10) eine senkrechte Linie umfasst.

13. Lastträger nach Anspruch 12, **dadurch gekennzeichnet, dass** die zweite, justierbare Verbindung zwischen den Seitenstücken (12a, 12b) und den Feststellseitenteilen (37) aus einer Schraube-Mutter-Verbindung (42) besteht, die in den Öffnungen (23, 43) angeordnet sind, die in den Stücken (12) und den Teilen (37) bereitgestellt sind.

## Revendications

1. Porte - charges, par exemple pour porte - vélo, qui est équipé d'un dispositif de couplage (10) destiné à être couplé de façon amovible avec un crochet d'attelage de véhicule (25) possédant une portion de col (26) et une portion sphérique (27), le dispositif de couplage comprenant les éléments constitutifs suivants :
a. un logement de couplage (11) comprenant au moins deux portions latérales de logement (12a, 12b), qui sont dotées de moyens d'appui (16a, 16b) pour recevoir un arbre à cames (15) ;
b. un premier membre de serrage de sphère (14) disposé entre les portions latérales de logement (12a, 12b) du logement de couplage (11) et connecté à demeure avec le logement ;
c. l'arbre à cames (15) connecté de façon rotative avec les portions latérales de logement (12a, 12b) du logement de couplage (11), et par ailleurs doté d'au moins une pièce de forme excentrique (31) pour tendre un membre résilient ou de ressort (28) d'un deuxième membre de serrage de sphère (20) ;
d. le deuxième membre de serrage de sphère (20) étant disposé de façon rotative sur l'arbre à cames (15) dans le logement de couplage (11) entre les portions latérales de logement (12a, 12b), ledit membre de serrage (20) étant par ailleurs doté d'un membre résilient ou de ressort (28) ;
e. un levier (18) connecté à demeure avec l'arbre à cames (15) pour faire entrer ledit arbre à cames en rotation vis-à-vis de son axe longitudinal ;
les uns et les autres de telle sorte que le logement de couplage (11) soit successivement couplé sur le crochet d'attelage (25), par une première étape qui abaisse le logement de couplage ouvert (11) sur la sphère (27), résultant dans la rotation du deuxième membre de serrage de sphère (20) par rapport à l'arbre à came (15), depuis une première position ouverte du dispositif de couplage jusqu'à une deuxième position fermée finale dudit dispositif, les premier et deuxième membres de serrage de sphère (14, 20) engrenant respectivement la sphère (27) par serrement sur des côtés opposés, et par une deuxième étape qui bascule le levier (18), résultant dans l'adossement de la pièce de forme excentrique (31) de l'arbre à cames (15) sur le membre résilient ou de ressort (28), de sorte que le deuxième membre de serrage de sphère (20) soit déplacé dans la direction de la sphère (27), les deux membres de serrage de sphère (14, 20) exerçant une force de serrage intense sur des côtés opposés de la sphère (27) du crochet d'attelage (25) en conséquence.

2. Porte - charges selon la revendication 1, **caractérisé en ce que** le levier (18) est formé par deux pièces de levier (18a, 18b) qui sont connectées à demeure au porte - charges, les pièces de levier sur l'extérieur des deux cotés des pièces latérales de logement (12a, 12b) étant chacune connectées à demeure aux extrémités extérieures de l'arbre à cames (15).

3. Porte - charges selon l'une des revendications précédentes, **caractérisé en ce que** le dispositif de couplage (10) est déplacé avec le porte charge dans une troisième position d'inclinaison lorsque le levier (18) continue à basculer, les membres de serrage de sphère (14, 20) continuant à engager la sphère (27) du crochet d'attelage (25) par serrement sur des côtés opposés, permettant ainsi au porte - charges d'assumer une position descendante temporaire, particulièrement pour permettre l'ouverture libre du hayon du véhicule à l'écart du porte - charges, le dispositif de couplage (10) pouvant ensuite être déplacé dans sa position précédente, par exemple suite à la fermeture du hayon.

4. Porte - charges selon l'une des revendications précédentes, **caractérisé en ce que** le membre résilient ou ressort (28) est assemblé à partir d'un nombre de rondelles de belleville.

5. Porte - charges selon la revendication 4, **caractérisé en ce que** le deuxième membre de serrage de sphère (20) possède une forme essentiellement cylindrique et comprend des renfoncements (29), les renfoncements (29) pour accommoder l'arbre à cames (15) étant situés, suivant un plan de section en coupe, dans la paroi de cylindre (24) distante au dos dudit membre (20) et de façon diamétralement opposée les uns aux autres ; lesdits renfoncements (29) étant préférablement situés à proximité du dos du deuxième membre de serrage de sphère (20) ; de telle sorte que, dans la première position ouverte du dispositif de couplage (10), la face du deuxième membre de serrage de sphère (20) soit orientée de façon descendante.

6. Porte - charges selon la revendication 5, **caractérisé en ce que** la pièce de forme excentrique (31) de l'arbre à cames (15) est équipée d'une première portion de came (32), qui possède un rayon croissant dans une direction circonférentielle par rapport au rayon de la portion non - excentrique (34) de l'arbre à cames (15), dans le cas où la force de serrage est exercée sur le deuxième membre de serrage de sphère (20) dans la deuxième position fermée du dispositif de couplage (10), et une portion de transition (33) entre la première portion de came (32) et la deuxième portion, qui est dotée d'un rayon de circonférence constant dans le but d'obtenir une force de serrage constante au cours du mouvement du porte - charges et du levier (18) connecté avec le porte - charges entre la deuxième position et sa troisième position (temporaire).

7. Porte - charges selon l'une des revendications précédentes, **caractérisé en ce que** les portions latérales de logement (12a, 12b) du logement de couplage (11) sont conçues comme deux portions de plaque droites en extension et essentiellement parallèles (12a, 12b), avec leurs premières extrémités étant connectées à demeure au premier membre de serrage de sphère (14) et avec leurs extrémités opposées étant interconnectées au moyen d'un membre d'appui (19), qui empêche le positionnement de la face du deuxième membre de serrage de sphère (20) dans une position orientée de façon descendante et pleinement perpendiculaire (dans la première position ouverte du dispositif de couplage (10)).

8. Porte - charges selon l'une des revendications précédentes, **caractérisé en ce que** le dispositif de couplage (10) est équipé d'un membre de verrouillage (35, 38), qui coopère avec des moyens de verrouillage (36, 37, 40) fournis sur le logement de couplage (11) en verrouillant la position du dispositif de couplage (10) dans sa deuxième position fermée.

9. Porte - charges selon la revendication 8, **caractérisé en ce que** le membre de verrouillage est constitué d'une baguette de verrouillage (35) qui s'étend entre deux renfoncements (39a, 39b) fournis dans les deux pièces de levier (18a, 18b), lesdits renfoncements étant formés de telle sorte que la baguette de verrouillage (35) soit radialement déplaçable dans les pièces de levier (18a, 18b) ; les moyens de verrouillage étant réalisés sous la forme de deux éléments latéraux de verrouillage parallèles et à la forme préférablement lamellaire (37a, 37b), qui s'étendent de façon équidistante et parallèle aux pièces latérales (12a, 12b), lesdits éléments latéraux étant dotés d'une arête dorsale concave de forme circulaire - arête à l'opposée des membres de serrage de sphère (14, 20) - le rayon de courbure correspondant à la distance entre le renfoncement (39) et l'axe central de l'arbre à cames (15) sur le levier.

10. Porte - charges selon la revendication 9, **caractérisé en ce que** les éléments latéraux de verrouillage (37a, 37b) sont dotés d'un renfoncement (36) sur leurs parois dorsales circulaires (40), qui est destiné à recevoir la baguette de verrouillage (35), les éléments latéraux de verrouillage (37) forçant la baguette de verrouillage (35) dans la position extrême des renfoncements (39) contre la force élastique dans une première position ouverte du dispositif de couplage (10) et. dans une deuxième position fermée (verrouillée) du dispositif de couplage (10), la baguette de verrouillage (35) est forcée à l'intérieur du renfoncement (36) des éléments latéraux de verrouillage (37).

11. Porte - charges selon la revendication 10, **caractérisé en ce qu'**au moins un parmi les éléments latéraux de verrouillage (37) est doté d'une surface d'appui (41), afin de limiter le déplacement des pièces de levier (18) et du porte - charge connecté avec les pièces de levier dans une troisième position du dispositif de couplage (10), en appuyant la baguette de verrouillage (35) sur la surface d'appui (41).

12. Porte - charges selon la revendication 9, **caractérisé en ce que** les éléments latéraux de verrouillage (37) sont connectés de façon amovible avec les pièces latérales (12) au moyen d'une première ouverture (44) pour guider l'arbre à cames (15), résultant dans la rotation des éléments latéraux de verrouillage (37) par rapport aux pièces latérales (12) et à une deuxième connexion ajustable (42) avec les pièces latérales (12), de telle sorte que les éléments latéraux de verrouillage (37) puissent assumer diverses positions inclinées par rapport aux pièces latérales (12), permettant ainsi l'ajustement de la position du porte - charge dans un plan comprenant une ligne horizontale, qui est perpendiculaire à l'axe de roue du véhicule, et une ligne verticale perpendiculaire, dans la deuxième position fermée (verrouillée) du dispositif de couplage (10).

13. Porte - charges selon la revendication 12, **caractérisé en ce que** la deuxième connexion ajustable entre les pièces latérales (12a, 12b) et les éléments latéraux de verrouillage (37) est constituée d'une connexion par boulon avec écrou (42) disposée dans les ouvertures (23, 43) qui sont pratiquées dans les pièces (12) et les éléments (37).
